(19) Europäisches Patentamt
European Patent Office
Office européen des brevets

(11) Veröffentlichungsnummer: **0 639 597 A1**

# (12) EUROPÄISCHE PATENTANMELDUNG

(21) Anmeldenummer: **94106395.0**

(51) Int. Cl.[6]: **C08G 18/70**, C08J 11/06

(22) Anmeldetag: **25.04.94**

(30) Priorität: **20.08.93 DE 4328076**

(43) Veröffentlichungstag der Anmeldung:
**22.02.95 Patentblatt 95/08**

(84) Benannte Vertragsstaaten:
**BE DE ES FR GB IT SE**

(71) Anmelder: **BAYER AG**
**D-51368 Leverkusen (DE)**

(72) Erfinder: **Hermann, Marc, Dr.**
**Dierath 37**
**D-42799 Leichlingen (DE)**
Erfinder: **Jansen, Bernhard, Dr.**
**Roggendorfstrasse 65**
**D-51061 Köln (DE)**
Erfinder: **Wagner, Joachim, Dr.**
**Semmelweisstrasse 135**
**D-51061 Köln (DE)**
Erfinder: **Müller, Hanns Peter, Dr.**
**Hollweg 20**
**D-51519 Odenthal (DE)**

## (54) Verfahren zur Herstellung von weichen, Urethangruppen aufweisenden Schaumstoffen.

(57) Weiche, Urethangruppen aufweisende Schaumstoffe werden durch Unsetzung von
1) modifizierten Polyisocyanaten, welche Reaktionsprodukte von Polyurethanen mit Polyisocyanaten, die in Gegenwart von Acylierungs- und/oder Alkylierungsmitteln hergestellt worden sind, darstellen, mit
2) mindestens zwei gegenüber Isocyanaten aktive Wasserstoffatome aufweisende Verbindungen vom Molekulargewicht 400 bis 10.000,
3) Wasser und/oder organischen Treibmitteln gegebenenfalls in Gegenwart von
4) mindestens zwei gegenüber Isocyanaten reaktionsfähigen Wasserstoffatomen aufweisende Verbindungen vom Molekulargewicht von 32 bis 399 als Vernetzer sowie gegebenenfalls in Gegenwart von
5) an sich bekannten Hilfs- und Zusatzstoffen hergestellt.

EP 0 639 597 A1

Polyurethane sind, wie alle anderen Kunststoffe auch, für ein stoffliches Recycling geeignet. Für die Wiederverwendung von Polyurethanen gibt es mehrere Ansätze; diese betreffen teils physikalische, teils chemische Verfahren zur Aufbereitung. In dem Übersichtsartikel mit dem Titel "Chemical degradation of polyurethane" von Vincent Gajewski, veröffentlicht in Rubber World, Sept. 1990, Seite 15 bis 18, sind für den chemischen Abbau von Polyurethan folgende Reaktionen genannt:

- Hydrolyse
- Thermolyse
- Oxidation
- Photolyse
- Pyrolyse
- Solvolyse
- mikrobieller Abbau.

Bewertet man die Verfahren besonders im Hinblick auf Verarbeitbarkeit der Spaltprodukte, sind für die Recycling-Bemühungen folgende Reaktionen von besonderer Bedeutung:

- Die Hydrolyse (E. Grigat, Kunststoffe, 68, (1978), S. 12) führt zu Polyol-Amin-Gemischen und $CO_2$ als Nebenprodukt. Die Abbauprodukte können sehr leicht wiederverwendet werden.
- Bei der Alkoholyse (G. Bauer in K.J. Thomé-Kozminsky (Hrsg.): Recycling international, vol. 1, EF-Press, Berlin 1989, S. 415 und F. Simioni, S. Bisello, Cell. Polym. 2 (1983) S. 281) wird eine Umsetzung bewirkt, welche unter Verwendung kurzkettiger Diole zu Polyhydroxyalkoholen und niedermolekularen Urethanstrukturen führt.

Da in beiden Fällen (Alkoholyse und Hydrolyse) Rezepturen entwickelt werden können, die durch Zugabe frischen Polyols und frischen Isocyanats zu neuem Polyurethanschaum oder ähnlichen Produkten führen, sind solche Verarbeitungsverfahren wie die Pyrolyse zu Crackprodukten weniger interessant und vergleichsweise produktfern.

Eine weitere Recyclingmöglichkeit beinhaltet, fein gepulverten Polyurethanschaum (Herstellung z.B. gemaß DE-A 4 200 443) bei der Polyurethanherstellung in die Polyolkomponente einzufügen (z.B. wie in US-PS 4 692 470 beschrieben).

Hier müssen als Grundbedingungen für die Verarbeitbarkeit eine gewisse Korngröße des Polyurethanmahlgutes und eine homogene Verteilung desselben im Polyol bei gleichzeitig möglichst hohem Gehalt an Mahlgut und geringer Viskosität gewährleistet sein.

Hydrolyse, Alkoholyse und die Einarbeitung gemahlenen Schaumstoffes in die Polyolkomponente haben gemeinsam die Notwendigkeit zur Bereitstellung einer speziell auf deren Folgeprodukte als Polyurethanrohstoffe maßgeschneiderten Rezeptur.

Außerdem ist aus verarbeitungstechnischen Gründen (Viskosität, Stabilität der Suspension, Kollapsneigung des Schaumes) bei der Verwendung von Schaumstoffpulver die Zusatzmenge begrenzt.

Überraschenderweise wurde nun gefunden, daß die Menge des wiederverarbeitbaren Polyurethans gesteigert werden kann, indem zerkleinerter Schaumstoff oder nicht-zelliges Polyurethan in Form von Schnitzeln, Pulver oder Flocken in die Isocyanatkomponente unter bestimmten Bedingungen chemisch eingearbeitet werden. Die so gewonnenen Isocyanatprepolymere gestatten einen unmittelbaren Einsatz als Polyurethanrohstoff im Schaum oder bei der Herstellung nicht-zelliger Polyurethane.

Desgleichen überraschend und auch für den Fachmann schwerlich vorauszusehen ist die Tatsache, daR die bei Zugabe von Schaumstoffpulver in die Polyolkomponente zu beobachtende Offenzelligkeit des resultierenden Schaumstoffes bei der Verwendung der erfindungsgemäßen Prepolymere vermieden wird, so daß es lediglich geringfügiger Rezepturoptimierungen bedarf.

Gegenstand der vorliegenden Erfindung ist ein Verfahren zur Herstellung von weichen, Urethangruppen aufweisenden Schaumstoffen durch Umsetzung von:

1) modifizierten Polyisocyanaten mit

2) mindestens zwei gegenüber Isocyanaten aktive Wasserstoffatome aufweisende Verbindungen vom Molekulargewicht 400 bis 10.000 in Gegenwart von

3) Wasser und/oder organischen Treibmitteln, gegebenenfalls in Gegenwart von

4) mindestens zwei gegenüber Isocyanaten reaktionsfähigen Wasserstoffatomen aufweisende Verbindungen vom Molekulargewicht von 32 bis 399 als Vernetzer sowie gegebenenfalls in Gegenwart von

5) an sich bekannten Hilfs- und Zusatzstoffen,

dadurch gekennzeichnet, daß als modifizierte Polyisocyanate 1) Reaktionsprodukte aus Polyurethanen mit Polyisocyanaten, die in Gegenwart von Acylierungs- und/oder Alkylierungsmitteln hergestellt worden sind, verwendet werden.

Erfindungsgemäß ist bevorzugt,

- daß zur Herstellung der modifizierten Polyisocyanate 1)1 bis 50 Gew.-%, vorzugsweise 5 bis 45 Gew.-%, Polyurethane, bezogen auf das modifizierte Polyisocyanat, eingesetzt worden sind,
- die Polyurethane in Form von Pulvern, Flocken und/oder Schnitzeln eingesetzt werden und
- die Aufwandsmenge an Acylierungsmittel in der Regel 0,71 bis 3,6 mmol, bevorzugt 0,71 bis 2,6 mmol, bezogen auf 1000 g des modifizierten Isocyanates 1) beträgt. Bei Verwendung von Alkylierungsmitteln beträgt die Aufwandsmenge 0,02 bis 1,1 mmol, bevorzugt 0,054 bis 0,54 mmol, bezogen auf 1000 g des modifizierten Isoyanates 1).

Gegenstand der Erfindung sind auch weiche Polyurethanschaumstoffe, erhältlich nach dem oben genannten Verfahren.

Für die Herstellung der weichen, Urethangruppen aufweisenden Schaumstoffe werden als Ausgangskomponenten eingesetzt:

1. Modifizierte Polyisocyanate, hergestellt aus Ausgangspolyisocyanaten der folgenden Formel

$Q\ (NCO)_n$,

in der

n 2 bis 4, vorzugsweise 2 bis 3, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, oder einen araliphatischen Kohlenwasserstoffrest mit 8 bis 15, vorzugsweise 8 bis 13 C-Atomen bedeuten, durch Reaktion mit Polyurethane in Gegenwart von Acylierungs- und/oder Alkylierungsmitteln..

Besonders bevorzugte Ausgangs-Polyisocyanate sind Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4,'4''-triisocyanat oder Polyphenyl-polymethylenpolyisocyanate, wie sie durch Anilin-Formaldehyd-Kondensation und anschließende Phosgenierung erhalten werden.

Geeignete höhermolekulare Ausgangs-Polyisocyanate sind Modifizierungsprodukte derartiger einfacher Polyisocyanate, d.h. Polyisocyanate mit z.B. Isocyanurat-, Carbodiimid-, Allophanat, Biuret- oder Uretdion-Struktureinheiten, wie sie nach an sich bekannten Verfahren aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen zu erwähnen.

Diese Prepolymeren werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen, hergestellt.

Im Rahmen der vorliegenden Erfindung sind unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen.

Erfindungsgemäß besonders bevorzugte Ausgangs-Polyisocyanate sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanato-dicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Als Polyurethane sind möglich alle zelligen und nicht zelligen Polyurethane, seien es Block-, Form-, Heiß- oder Kaltschaumstoffe, thermoplastische Polyurethane, Polyurethan-RIM, Elastomere usw.. Von Interesse für die Verarbeitung ist vor allem die Tatsache, daß das Polyurethan nicht fein gepulvert sein

maß, sondern durchaus körnig-grob, ja sogar in Form von Flocken und/oder Schnitzeln eingesetzt werden kann. Dadurch entfallen kostenverursachende Mahlbehandlungen sowie eine aufwendige Trennung der Korngröße durch Sieben oder Windsichten. Der Anteil an Polyurethan kann 1 bis 50 %, bezogen auf das Gewicht der Isocyanatkomponente, betragen, bevorzugt jedoch 5 bis 45 %.

Bei der Herstellung der modifizierten Isocyanate 1) werden erfindungsgemäß acylierende oder alkylierende Substanzen mitverwendet, welche als solche an sich bekannt sind und oft als Stabilisierungsmittel in der Polyurethanchemie Verwendung finden. Acylierungsmittel sind z.B. Säurechloride, wie Benzoylchlorid, Isophthaloylchlorid etc., also z.B. Verbindungen der allgemeinen Formel:

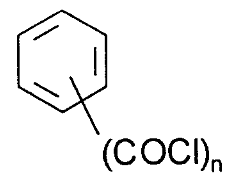

$n = 1, 2$

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkyester wie Methansulfonsäuremethylester, n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder n-butylester, 1 -Naphthalinsulfonsäuremethylester, 3 -Nitrobenzolsulfonsäure-methylester oder 2-Naphthalinsulfonsäuremethylester. Aromatische Sulfonsäurealkylester sind bevorzugt. Besonders bevorzugt wird p-Toluolsulfonsäuremethylester verwendet.

Die Aufwandmenge an Acylierungsmittel beträgt in der Regel 0,71 bis 3,6 mmol, bevorzugt 0,71 bis 2,6 mmol, bezogen auf 1000 g des modifizierten Isocyanates 1). Bei Verwendung von Alkylierungsmitteln beträgt die Aufwandsmenge 0,02 bis 1,1 mmol, bevorzugt 0,054 bis 0,54 mmol, bezogen auf 1000 g des modifizierten Isocyanates 1).

2. Ausgangskomponenten sind ferner Verbindungen mit mindestens zwei gegenüber Isocyanaten reaktionsfähigen Wasserstoffatomen und einem Molekulargewicht von 400 bis 10.000, mit 2 bis 8, vorzugsweise 2 bis 6, Hydroxylfunktionen. Die hier angegebenen Molekulargewichte sind aus der OH-Zahl der Substanz über folgende Beziehung zu errechnen:

$$\text{Molekulargewicht} = \frac{56.000}{\text{OH-Zahl}} \times \text{Funktionalität}$$

Es können beispielsweise Polyhydroxypolyether der aus der Polyurethanchemie an sich bekannten Art verwendet werden, wie sie durch Alkoxylierung geeigneter Startermoleküle wie Ethylenglykol, Diethylenglykol, 1 ,4-Dihydroxybutan, 1,6-Dihydroxyhexan, Trimethylolpropan, Glycerin, Pentaerythrit, Sorbit oder Saccharose zugänglich sind. Als Starter können ebenfalls fungieren: Ammoniak oder Amine wie Ethylendiamin, Hexamethylendiamin, 2,4-Diaminotoluol, Anilin oder Aminoalkohole. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säure in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796,

2 550 797, 2 550 833, 2 550 862, 2 633 293 und 2 639 254 beschrieben. Es ist aber auch möglich gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Schaumstoffe von besonderer Flammwidrigkeit.

Vertreter der genannten erfindungsgemäß als Komponente 2) zu verwendenden Verbindungen sind z.B. in High Polymers, Vol XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Ferner sind als Komponente 2) bzw. als Teil der Komponente 2) geeignet sind endständige aliphatische und aromatische primäre Aminogruppen aufweisende Polyetherpolyamine wie sie beispielsweise gemäß der in EP-A-79 536, DE-A-2 948 419, DE-A-2 019 432, DE-A-2 619 840, US-A-3 808 250, US-A-3 975 426 oder US-A-4 016 143 beschriebenen Verfahren zugänglich sind. Bevorzugt sind Polyetherpolyole mit Molekulargewichten von 2.000 bis 6.000 und einer Funktionalität von 2 bis 6.

3. Als Treibmittel wird in der Regel Wasser in einer Menge von 0,5 bis 10 Gew.-Teile, bezogen auf 100 Gew.-Teile der Summe der Komponenten 2) verwendet.

Es können auch organische Treibmittel gegebenenfalls im Gemisch mit Wasser eingesetzt werden. Geeignet sind Flüssigkeiten, welche gegenüber den modifizierten Polyisocyanaten 1) inert sind und Siedepunkte unter 100 °C, vorzugsweise unter 50 °C, insbesondere zwischen -50 °C und 30 °C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, Cyclopentan, n- und iso-Butan und Propan, Ether wie Dimethylether und Diethylether, Ketone wie Aceton und Methylethylketon, Ethylacetat und halogenierte Kohlenwasserstoffe wie Methylenchlorid, Trichlorfluormethan, Dichlordifluorethan und 1,1,2-Trichlor-1,2,2-trifluorethan. Auch Gemische dieser niedrigsiedenden Flüssigkeiten untereinander und/oder mit anderen Substituenten oder unsubstituierten Kohlenwasserstoffen können verwendet werden. Nähere Angaben über den Rezepturanteil obengenannter organischer Treibmittel und die Eigenschaften der damit hergestellten weichen Polymethanschaumstoffe sind aus dem Kunststoff-Handbuch, Band VII, Vieweg-Höchlen, Carl-Hanser-Verlag, München 1983, z.B. auf den Seiten 194 ff zu entnehmen.

4. Als Verbindungen mit mindestens zwei gegenüber Isocyanaten reaktionsfähigen Wasserstoffatomen und einem Molekulargewicht von 32 bis 399 versteht man Hydroxylgruppen und/oder Aminogruppen und/oder Thiolgruppen und/oder Carboxylgruppen aufweisende Verbindungen, vorzugsweise Hydroxylgruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hierfür werden in der DE-OS 2 832 253, Seite 19 bis 20, beschrieben.

5. Die gegebenenfalls mitzuverwendenden Hilfs- und Zusatzstoffe sind z.B.:

1. an sich bekannte oberflächenaktive Zusatzstoffe wie Emulgatoren und Schaumstabilisatoren;

2. Katalysatoren, wie sie an sich bekannt sind, vorzugsweise organische Sn(II)- und/oder Sn(IV)-Verbindungen, insbesondere Sn(II)- und Sn(IV)Derivate höherer Carbonsäuren und/oder vorzugsweise tertiäre aminische Katalysatoren wie beispielsweise:

Dimethylbenzylamin, Dicyclohexylamin, Dimethylcyclohexylamin, N,N,N',N'-Tetramethyl-diaminodiethylether, Bis(dimethylaminopropyl)harnstoff,N-Methyl- bzw. N-Ethylmorpholin, Dimethylpiperazin, N-Dimethylaminoethylpiperidin, 1,2-Dimethylimidazol, Dimethylaminoethanol und insbesondere Triethylendiamin und N,N'-Bis(3-dimethylaminopropyl)formamid.

3. Füllstoffe, Farbstoffe und Pigmente. Nähere Angaben über die üblichen Hilfs- und Zusatzstoffe sind der Fachliteratur, beispielsweise der Monographie von J.H.Saunders und K.G. Frisch "High Polymers" Band XVI, Polyurethanes, Teil 2 und 7, Verlag Interscience Publishers 1962 bzw. 1964, zu entnehmen.

**Durchführung des erfindungsgemäßen Verfahrens:**

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Diese Umsetzung kann in offenen oder geschlossenen Formen erfolgen. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Im allgemeinen wird die Umsetzung bei Kennzahlen von 90 bis 300, vorzugsweise 100 bis 250 durchgeführt. Bei Anwendung höherer Kennzahlen entstehen auch Isocyanuratstrukturen im Schaumstoff.

Wird bei der Schaumstoffherstellung die Verschäumung in geschlossenen Formen durchgeführt, so wird das Reaktionsgemisch in eine Form eingetragen. Als Formmaterial kommt Metall, z.B. Aluminium oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet: eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die nach der Erfindung erhältlichen Polyurethan-Weichschaumstoffe finden vorzugsweise als Sitz-, Lehnen- oder Kopf-Polstermaterial bzw. als Hinterschäummaterial für Akustik-Schaumstoffe Anwendung.

**Ausführungsbeispiele:**

A. **Ausgangsmaterialien** (alle Gehaltsangaben erfolgen in Gewichts-%)

Polyether 1:

Ein auf Trimethylolpropan gestarteter und durch Propoxylierung gewonnener Polyether, der mit ca. 18 % EO endverlängert wird und eine OH-Zahl von 28 besitzt.

Polyether 2:

Ein auf Propylenglykol gestarteter und durch Propoxylierung gewonnener Polyether, der einen aus 39 % Ethylenoxid und 46 % Propylenoxid bestehenden Mischblock an dem Propoxylierungsprodukt aufweist und mit 9,5 % Ethylenoxid endverlängert ist (OH-Zahl 56).

Polyether 3:

Ein auf Trimethylolpropan gestarteter und durch Propoxylierung gewonnener Polyether, der mit 14 % Ethylenoxid endverlängert ist und eine OH-Zahl von 28 aufweist.

Polyether 4:

Ein auf Trimethylolpropan gestarteter und durch Propoxylierung gewonnener Polyether, der mit 18 % EO endverlängert ist, eine OH-Zahl von 35 besitzt, jedoch als organischen Füllstoff noch 20 % eines Reaktionsproduktes von Styrol und Acrylnitril enthält, so daß die OH-Zahl für das Gesamtgemisch 28 beträgt.

Katalysator 1:

Bis-N,N'-dimethylaminodiethylether (70%ig in Dipropylenglykol).

Katalysator 2:

Triethylendiamin (33%ig in Dipropylenglykol).

Katalysator 3:

N,N'-Bis(3-Dimethylaminopropyl)formamid.

Stabilisator 1:

Tegostab® B 4617, Handelsprodukt der Th. Goldschmidt AG.

Stabilisator 2:

Tegostab® B 8002, Handelsprodukt der Th. Goldschmidt AG.

Stabilisator 3:

Tegostab® B 4113, Handelsprodukt der Th. Goldschmidt AG.

Zellöffner:

Ein auf Sorbit gestarteter, durch Propoxylierung gewonnener Polyether, der mit 82 % Ethylenoxid endverlängert ist und eine OH-Zahl von 100 besitzt.

Isocyanat 1:

Ein Isocyanatgemisch aus der Phosgenierung eines Anilin-Formaldehyd-Kondensationsproduktes mit 85 % Zweikernanteil und davon 20 % 2,4'-Diisocyanatodiphenylmethan.

Isocyanat 2 (erfindungsgemäß):

Ein Isocyanat wie unter Isocyanat 1 beschrieben, enthaltend 20 % eines Polyurethanschaumes in aufgelöster Form.

Herstellung: 800 g Isocyanat 1 und 200 g eines Polyurethanweichschaumpulvers werden zusammen mit 6,5 g einer 1 m-Lösung von p-Toluolsulfonsäuremethylester in Isocyanat 1 vorgelegt und unter Rühren auf 150 °C erhitzt. Wenn das Reaktionsgemisch dünnviskos geworden ist, wird noch 1 Stunde bei 150 °C nachgerührt. Der Isocyanatgehalt beträgt 22,5 %.

Isocyanat 3:

Ist ein Isocyanatgemisch aus einerseits dem 2,4- und 2,6-Isomeren des Toluylendiisocyanates im Verhältnis 80 zu 20 und zweitens polymeren 4,4'-Diisocyanatodiphenylurethan im Verhältnis 80:20 (NCO-Gehalt: 44,5 %).

Isocyanat 4 (erfindungsgemäß):

Ein Gemisch aus 20 Teilen polymeres 4,4'-Diisocyanatodiphenylmethan und 100 Teilen einer Lösung von 20 % Polyurethanweichschaumpulver in einem Gemisch aus dem 2,4- (80 %) und 2,6-Isomeren (20 %) des Toluylendiisocyanates. Der Isocyanatgehalt beträgt 35,3 %.

Herstellung der Lösung: 800 g des o.g. Toluylendiisocyanat-Isomerengemisches, 200 g Polyurethan und 6,5 g einer 1 molaren Lösung von p-Toluolsulfonsäuremethylester im o.g. Toluylendiisocyanat-Isomerengemisch werden zusammen vorgelegt und unter Rühren auf 150 °C erhitzt. Wenn das Reaktionsgemisch dünnviskos geworden ist, wird noch 1 Stunde bei 150 °C nachgerührt. Der Isocyanatgehalt beträgt

36 %.

Isocyanat 5:

Ein Gemisch aus 30 Teilen polymeren 4,4'-Diisocyanatodiphenylmethan und 70 Teilen eines Gemisches aus dem 2,4- (65 %) und dem 2,6-Isomeren (35 %) des Toluylendiisocyanates. Der Isocyanatgehalt beträgt 43,2 %.

Isocyanat 6 (erfindungsgemäß):

Ein Gemisch aus 30 Teilen polymerem 4,4-Diisocyanatodiphenylmethan und 87,5 Teilen einer Lösung von 20 % Polyurethanweichschaumpulver in einem Gemisch aus 2,4- (65 %) und dem 2,6-Isomeren (35 %) des Toluylendiisocyanates. Der Isocyanatgehalt beträgt 35 %. Die Herstellung der Lösung erfolgt wie bei Isocyanat 4.

**B Schaumstoffherstellung**

Alle Rezepturbestandteile bis auf das Isocyanat werden in einen Pappbecher eingewogen und mit einem schnell laufenden Rührwerk homogen vermischt. Nach Zugabe des Isocyanates wird nochmals intensiv gerührt und sodann das Reaktionsgemisch in eine mit Papier ausgekleidete Holzkastenform gegossen.

Folgende Übersichtstabellen geben die Schaumrezepturen der Beispiele 1 bis 6 wieder, einschließlich der Bewertung der hergestellten Schaumstoffe. Der Begriff Recyclingquote gibt den Anteil des wiederverwendeten Polyurethans an.

Tabelle 1: Schaumstoffe auf Basis 4,4'-Diisocyanatodiphenylmethan

| Bestandteilel | Beispiel 1 erfindungsgemäß (Gew.-Teile) | Beispiel 2 Vergleich (Gew.-Teile) |
|---|---|---|
| Polyether 1 | 90 | 90 |
| Polyether 2 | 10 | 10 |
| $H_2O$ | 3,5 | 3,5 |
| Katalysator 1 | 0,2 | 0,2 |
| Katalysator 2 | 0,35 | 0,35 |
| Stabilisator 1 | 1,0 | 1,0 |
| Diethanolamin | 0,5 | 0,5 |
| Zellöffner | 4,0 | 4,0 |
| 2-Ethylhexansäure | 0,2 | 0,2 |
| Polyurethanpulver | 25 | 45,4 |
| Isocyanat 1 | - | 55,1 |
| Isocyanat 2 | 75,5 | - |
| Recyclingquote | 21,6 % | 21,6 % |
| Rohdichte ($kg/m^3$) | 72,5 | Kollaps des Schaumes |
| Stauchhärte (KPa) | 2,3 | |

Tabelle 2: Schaumstoffe auf Basis von 4,4'-Diisocyanatodiphenylmethan/-Toluylendiisocyanat-Gemischen

| Bestandteile | Beispiel 3 Vergleich (Gew.-Teile) | Beispiel 4 erfindungsgemäß (Gew.-Teile) |
|---|---|---|
| Polyether 3 | 60 | 60 |
| Polyether 4 | 40 | 40 |
| $H_2O$ | 3,8 | 3,8 |
| Katalysator 1 | 0,05 | 0,05 |
| Katalysator 2 | 0,25 | 0,25 |
| Katalysator 3 | 0,45 | 0,45 |
| Diethanolamin | 1,0 | 1,0 |
| Stabilisator 1 | 2,0 | 2,0 |
| Stabilisator 2 | 0,1 | 0,1 |
| Zellöffner | 1,5 | 1,5 |
| Isocyanat 3 | 48,1 | - |
| Isocyanat 4 | - | 60,6 |
| Polyurethanpulver | 25 | 25 |
| Recyclingquote | 13,7 % | 19,3 % |
| Rohdichte ($kg/m^3$) | Kollaps des Schaumes | 57,5 |
| Offenzelligkeit | | offenzellig |
| Porenstruktur | | regelmäßig-unregelmäßig (typische Kaltschaumpore) |

Tabelle 3

| Schaumstoffe auf Basis von 4,4'-Diisocyanatodiphenylmethan/-Toluylendiisocyanat-Gemischen | | |
|---|---|---|
| Bestandteile | Beispiel 5 Vergleich (Gew.-Teile | Beispiel 6 erfindungsgemäß (Gew.-Teile) |
| Polyether 3 | 60 | 60 |
| Polyether 4 | 40 | 40 |
| $H_2O$ | 3,8 | 3,8 |
| Katalysator 1 | 0,05 | 0,05 |
| Katalysator 2 | 0,25 | 0,25 |
| Katalysator 3 | 0,45 | 0,45 |
| Diethanolamin | 0,4 | 0,6 |
| Stabilisator 1 | - | 0,6 |
| Stabilisator 3 | 1,0 | - |
| Isocyanat 5 | 45,8 | - |
| Isocyanat 6 | - | 57,0 |
| Recyclingquote | 0 % | 6,9 % |
| Rohdichte (kg/m$^3$) | 40,5 | 42,5 |
| Stauchhärte (KPa) | 6,2 | 6,1 |
| Durckverformungsrest (50%) (%) | 5,6 | 8,6 |
| Bruchdehnung (%) | 105 | 96 |
| Zugfestigkeit (KPa) | 157 | 142 |

## Patentansprüche

**1.** Verfahren zur Herstellung von weichen, Urethangruppen aufweisenden Schaumstoffen durch Umsetzung von
1) modifizierten Polyisocyanaten mit
2) mindestens zwei gegenüber Isocyanaten aktive Wasserstoffatome aufweisende Verbindungen vom Molekulargewicht 400 bis 10.000 in Gegenwart von
3) Wasser und/oder organischen Treibmitteln, gegebenenfalls in Gegenwart von
4) mindestens zwei gegenüber Isocyanaten reaktionsfähigen Wasserstoffatomen aufweisende Verbindungen vom Molekulargewicht 32 bis 399 als Vernetzer sowie gegebenenfalls in Gegenwart von
5) an sich bekannten Hilfs- und Zusatzstoffen,
dadurch gekennzeichnet, daß als modifizierte Polyisocyanate 1) Reaktionsprodukte aus Polyurethanen mit Polyisocyanaten, die in Gegenwart von Acylierungs- und/oder Alkylierungsmitteln hergestellt worden sind, verwendet werden.

**2.** Verfahren gemaß Anspruch 1, dadurch gekennzeichnet, daß zur Herstellung der modifizierten Polyisocyanate 1)1 bis 50 Gew.-%, vorzugsweise 5 bis 45 Gew.-%, Polyurethane, bezogen auf das modifizierte Polyisocyanat, eingesetzt worden sind.

**3.** Verfahren gemäß Anspruch 1 und 2, dadurch gekennzeichnet, daß die Polyurethane in Form von Pulvern, Flocken und/oder Schnitzeln eingesetzt werden.

**4.** Verfahren gemäß Anspruch 1 bis 3, dadurch gekennzeichnet, daß Alkylierungsmittel in einer Aufwandsmenge von 0,71 bis 3,6 mmol, bevorzugt 0,71 bis 2,6 mmol, als Acylierungsmittel jedoch in einer

Aufwandsmenge von 0,02 bis 1,1 mmol, bevorzugt 0,054 bis 0,54 mmol, jeweils bezogen auf 1000 g des modifizierten Isocyanates 1) eingesetzt werden.

**5.** Weiche Polyurethanschaumstoffe, erhältlich nach den Verfahren gemäß Ansprüchen 1 bis 4.

Europäisches Patentamt

# EUROPÄISCHER RECHERCHENBERICHT

Nummer der Anmeldung
EP 94 10 6395

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 047 419 (BAYER)<br>* Seite 4, Zeile 12 - Seite 7, Zeile 13 *<br>* Seite 14, Zeile 21 - Seite 15, Zeile 4; Ansprüche 1-3; Beispiel 11 *<br>--- | 1 | C08G18/70<br>C08J11/06 |
| A | EP-A-0 341 516 (BAYER)<br>* Seite 2, Zeile 34 - Zeile 46 *<br>--- | 1 | |
| A | EP-A-0 432 444 (BAYER)<br>* Seite 5, Zeile 15 - Zeile 24; Anspruch 1 *<br>--- | 1 | |
| A | FR-A-2 352 011 (ICI)<br>* Seite 1, Zeile 31 - Seite 4, Zeile 5; Ansprüche 1-6 *<br>--- | 1 | |
| A | EP-A-0 459 731 (ICI)<br>--- | | |
| A | EP-A-0 302 271 (DOW)<br>----- | | |

RECHERCHIERTE SACHGEBIETE (Int.Cl.6)

C08G
C08J
C08L

Der vorliegende Recherchenbericht wurde für alle Patentansprüche erstellt

| Recherchenort | Abschlußdatum der Recherche | Prüfer |
|---|---|---|
| DEN HAAG | 6. Dezember 1994 | BOURGONJE, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)